# EUROPEAN PATENT APPLICATION

(11) **EP 4 848 344 A1**
(43) Date of publication of application: **02.12.2026**
(21) Application number: 25838926.1
(22) Date of filing: 18.12.2025
(51) Int. Cl.: H01M 4/04, B30B 3/04, B30B 3/00, B30B 15/26

(54) **PRESS DEVICE FOR SECONDARY BATTERIES**

(30) Priority: 31.03.2025 KR 20250041748
(71) Applicant: Youil Energy Tech.Co., Ltd, Anseong-si, Gyeonggi-do 17553 (KR)
(72) Inventor: CHUNG, Youn Gil, Gwonseon-gu, Suwon-si, Gyeonggi-do 16582 (KR)
(74) Representative: do Nascimento Gomes, Rui
(86) International application number: PCT/KR2025/022193
(87) International publication number: WO 2026/212097

(57) **Abstract**

Disclosed is a press device for a secondary battery configured to sequentially press a plurality of unit materials supplied continuously. The press device includes: a press part configured to contact the unit material in an up-down direction; and a controller configured to control rotation of the press part. The controller controls the press part to perform an oscillating motion in forward and reverse directions within a predetermined angle range about a shaft of the press part. When a center of the unit material is aligned with a center of the press part, the unit material moves forward by a predetermined distance and backward by the predetermined distance in a transport direction of the unit material, and then moves forward again to be aligned again with the center of the press part. The press part presses the unit material while rotating in a direction corresponding to a movement direction of the unit material.

## Description

### CROSS-REFERENCE TO RELATED APPLICATION

This application claims priority to and the benefit of Korean Patent Application No. 10-2025-0041748 filed on 31 March, 2025, the disclosure of which is incorporated herein by reference in its entirety.

### BACKGROUND

### Technical Field

The present disclosure relates to a press device for a secondary battery.

### Description of Related Technology

Secondary batteries are capable of repeated use through charging and discharging. Electrodes used in secondary batteries are composed of a positive electrode and a negative electrode. Electrode quality problems occur due to pores formed during coating of an active material on the electrodes and due to deterioration in adhesion between electrodes caused by expansion and contraction of electrode materials during charging and discharging. Therefore, a technology for enhancing adhesion between electrodes or between an electrode and an active material is required.

A press device for a secondary battery is a novel press device used to improve adhesion of an active material and adhesion between electrodes. Conventional press methods have employed a roll press and an isostatic press. In a roll press method, when an active material coated on an electrode is pressed by a roll press, the active material tends to be displaced toward one side of the electrode. In order to prevent such displacement and to increase a contact area between the roll press and the active material, it is advantageous to increase the size of the roll press. Yet, as the roll press is enlarged, the weight of the roll press excessively increases, thereby causing difficulties in precise control. An isostatic press method has limitations in that it requires multiple complicated processes and a long production time, making the method unsuitable for mass production.

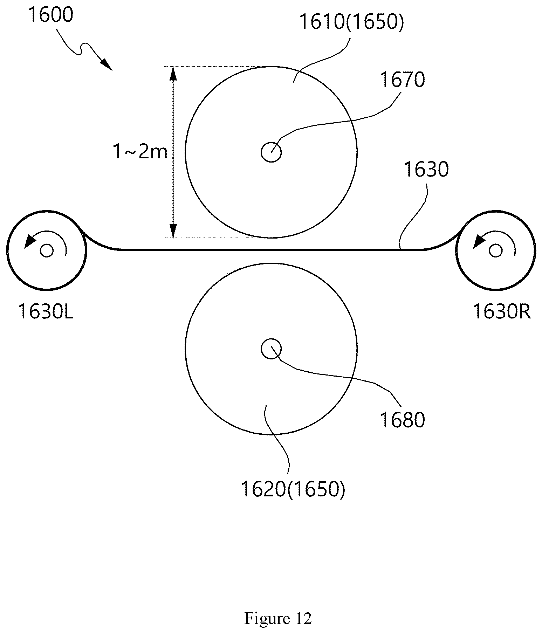

FIG. 12 is a conceptual diagram of a conventional press device.

A press device 1600 for a secondary battery may include a roll unit 1650 that presses an electrode 1630. The roll unit 1650 may include an upper roll 1610 and a lower roll 1620 disposed above and below the electrode 1630, respectively, with the electrode 1630 interposed therebetween. The upper roll 1610 and the lower roll 1620 may press the electrode 1630 while rotating about axes 1670 and 1680 of the roll unit 1650, respectively, above and below the electrode 1630 as the electrode 1630 moves in a transport direction thereof. Each of the upper roll 1610 and the lower roll 1620 may have a cylindrical shape. However, in the case of a large cylindrical upper roll 1610 and lower roll 1620 having a diameter of about 1 to 2 meters, the weight is very heavy, and it is not easy to precisely control the movement of the corresponding rolls.

In the press device 1600 in which an elongated electrode 1630 is released from one side 1630R and wound on the other side 1630L and passes between the upper roll 1610 and the lower roll 1620, the cylindrical upper roll 1610 and the lower roll 1620 are able to press the electrode 1630 while rotating. However, in the case where a unit material that is not a long electrode but is cut into sheet units and stacked in small quantities (hereinafter, electrodes cut into sheet units and stacked in multiples are referred to as unit materials) is supplied to the press device by a conveyor belt, there is a problem in that the size of the press device 1600 cannot but increase. This is because, due to the large sizes of the upper roll 1610 and the lower roll 1620, the unit material must enter the roll unit 1650 at a considerable distance, at least a distance greater than a radius of the roll unit 1650, so that the roll unit 1650 may press the unit material while rotating. As the size of the press device 1600 increases, maintenance of the press device 1600 becomes difficult, and control of the movement of the roll unit 1650 also becomes difficult.

Therefore, in an actual field, when a unit material formed by stacking a plurality of electrodes cut into sheet units is supplied to the press device 1600, it is very difficult to press the unit material using the cylindrical roll unit 1650 in the press device 1600.

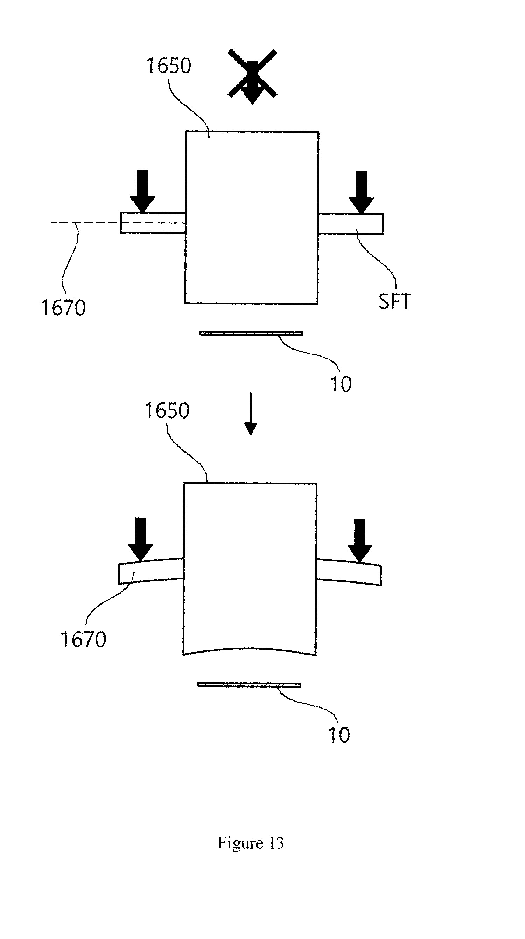

FIG. 13 is a conceptual diagram illustrating pressurization of a conventional press device.

The roll unit 1650 may have a complicated structure. Specifically, the roll unit 1650 may be provided with a heating oil flow path to apply heat to the pressed electrode 1630, and may include an inlet through which heating oil is introduced and an outlet through which heating oil is discharged. In addition, in the roll unit 1650, an oil cap (not shown) for preventing leakage of the heating oil must not interfere with a shaft SFT penetrating central axes 1670 and 1680 of the roll unit 1650. In addition, when the pressing force of the roll unit 1650 alone is not sufficient to press the electrode 1630, a separate pressing device may be used to press the roll unit 1650 so as to increase the pressing force applied to the electrode 1630. At this point, since the rotating roll unit 1650 cannot be directly pressed in an up-down direction, the shaft SFT of the roll unit 1650 is pressed, sometimes with a force of about 5 to 10 tons. However, when the shaft SFT of the roll unit 1650 is pressed, deformation occurs in the roll unit 1650 due to a pressing force applied by a pressurizing device (not shown), as illustrated in FIG. 13, and uniform pressure is not applied to the electrode 1630.

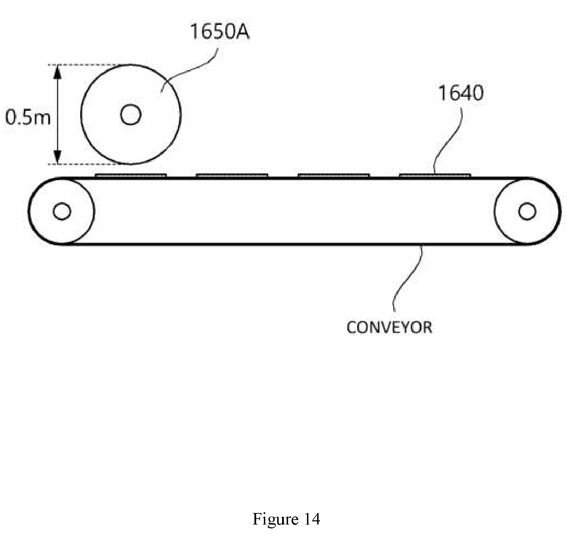

FIG. 14 is a conceptual diagram illustrating another example of a conventional press device.

To prevent problems caused by the large size of the roll unit 1650, a size of a cylindrical roll unit may be reduced. For example, a diameter of a roll unit 1650A may be reduced to 0.5 meters or less. Accordingly, even when cut sheet-unit electrodes 1640, which are difficult to press in an actual field using a roll unit having a large diameter, are supplied to the press device, the sheet-unit electrodes 1640 may be individually pressed. However, when a size of the cylindrical roll unit 1650A is small, and the roll unit 1650A rotates to press an edge of an electrode 1640, the pressure applied to the electrode 1640 acts as linear pressure that does not exhibit an effect of surface pressure, unlike a roll unit 1650 having a large diameter, which applies pressure having an effect similar to surface pressure. Accordingly, cracks may be generated in the electrode 1640, or a coating layer of the electrode may be pushed to cause wrinkles.

### SUMMARY

The present disclosure provides a press device for a secondary battery that reduces a size and weight of a press roller while enabling precise control, and that allows a contact surface of the press contacting a unit material to have an arc shape of a size substantially equivalent to that of a press having a large diameter, thereby realizing line pressure that provides a surface-pressure effect on the unit material, preventing occurrence of cracks or wrinkles in an electrode coating layer, and further enabling continuous pressing of electrodes supplied individually.

In one general aspect, there is provided a press device for a secondary battery configured to sequentially press a plurality of unit materials supplied continuously. The press device includes: a press part configured to contact the unit material in an up-down direction; and a controller configured to control rotation of the press part. The controller controls the press part to perform an oscillating motion in forward and reverse directions within a predetermined angle range about a shaft of the press part. When a center of the unit material is aligned with a center of the press part, the unit material moves forward by a predetermined distance and backward by the predetermined distance in a transport direction of the unit material, and then moves forward again to be aligned again with the center of the press part. The press part presses the unit material while rotating in a direction corresponding to a movement direction of the unit material.

The press part may include a curved contact surface that contacts the unit material, and the contact surface may have an arc shape when viewed from the shaft of the press part.

A width of the unit material may be less than an arc length of the contact surface, and a length of the press part may be variable in a longitudinal direction of the shaft in response to a length of the unit material.

The press device may further include a pressing member configured to press the press part vertically. The pressing members may be provided in a number that is variable in response to a length of the unit material, and a plurality of pressing members may be arranged along a longitudinal direction of the shaft of the press part.

The press part may include an upper press and a lower press arranged in an up-down direction with the unit material interposed therebetween. Each of the upper press and the lower press comprises a body in which the shaft is formed, and a contact portion connected to the body and comprising the contact surface. Each of the upper press and the lower press has an overall fan shape. The contact portion is detachably coupled to the body, and an arc length of the contact surface of the contact portion is also variable in response to a width of the unit material.

When the center of the unit material is aligned with the center of the press part, the press part may move vertically toward the unit material to press the unit material while rotating in a direction corresponding to a movement direction of the unit material, and when the center of the unit material is aligned with the center of the press part again, the press part may move vertically away from the unit material to release pressure applied to the unit material.

When the pressure applied by the press part is released, the unit material may move in the transport direction of the unit material, and a center of a subsequent unit material is aligned with the center of the press part.

The press part may include an upper press and a lower press arranged in an up-down direction with the unit material interposed therebetween, and the press part may further include a conveyor belt positioned below the unit material and configured to transport the unit material.

The upper press may only perform an oscillating motion in forward and reverse directions at a position close to the unit material, and the lower press may move vertically in the up-down direction below the conveyor belt to press the unit material or release pressure applied to the unit material.

When the unit material is aligned at a center of the lower press, the lower press may ascend vertically to press the conveyor belt and thereby press the unit material, and the upper press and the lower press may rotate in a direction corresponding to a movement direction of the unit material to press the unit material, and when the unit material is aligned with the center of the lower press again, the lower press may descend vertically, the pressed unit material may move in the transport direction of the unit material, and a center of a subsequent unit material may be then aligned with the center of the lower press.

The lower press may only perform an oscillating motion in the forward and reverse directions at a position close to the conveyor belt, and the upper press may move vertically in the up-down direction above the conveyor belt to press the unit material or release pressure applied to the unit material.

When the unit material is aligned with a center of the upper press, the upper press may descend vertically to press the unit material and the upper press and the lower press may rotate in a direction corresponding to a movement direction of the unit material to press the unit material, and when the unit material is aligned with the center of the upper press again, the upper press may ascend vertically, the pressed unit material may move in a transport direction of the unit material, and a center of a subsequent unit material may be then aligned with the center of the upper press.

The upper press and the lower press may simultaneously move vertically above and below the unit material and the conveyor belt to press the unit material or release pressure applied to the unit material.

A distance by which the unit material moves backward may be greater than a distance by which the unit material moves forward.

The press device further includes a film interposed between the upper press and the unit material.

The film may come into contact with the upper press and the unit material to protect a surface of the unit material when the upper press presses the unit material.<

The conveyor belt may include an upper conveyor belt positioned above the unit material and a lower conveyor belt positioned below the unit material, with the unit material interposed therebetween, and the conveyor belt may be formed of rubber or steel.

The press part further may include a transport plate in place of the lower press, the transport plate being configured to transport the unit material. When the upper press moves downward and comes into contact with the unit material at the center of the unit material, the upper press and the transport plate may rotate and move together in a forward direction corresponding to a transport direction of the unit material and then in a reverse direction opposite to the transport direction to press the unit material, and subsequently rotate and move so that the upper press is repositioned at the center of the unit material.

### BRIEF DESCRIPTION OF THE DRAWINGS

FIG. 1 is a diagram illustrating a press device for a secondary battery according to an embodiment;
FIG. 2 is a diagram illustrating an oscillating motion of a press part.
FIG. 3 is a diagram illustrating an example of a press part.
FIG. 4 is a diagram illustrating another example of a press part.
FIG. 5 is a diagram illustrating a pressing member that presses a press part.
FIG. 6 is a diagram illustrating a modified example of a pressing member that presses a press part.
FIG. 7 is a diagram illustrating a process of pressing a unit material using a press device for a secondary battery according to an embodiment of the present disclosure.
FIG. 8 is a diagram illustrating a process of pressing a unit material using a press device for a secondary battery according to another embodiment of the present disclosure.
FIG. 9 is a diagram illustrating a press device for a secondary battery according to another embodiment of the present disclosure;
FIG. 10 is a diagram illustrating a press device for a secondary battery according to yet another embodiment of the present disclosure;
FIG. 11 is a diagram illustrating a process of pressing a unit material using a press device for a secondary battery according to yet another embodiment of the present disclosure.
FIG. 12 is a conceptual diagram of a conventional press device.
FIG. 13 is a conceptual diagram illustrating pressurization of a conventional press device.
FIG. 14 is a conceptual diagram illustrating another example of a conventional press device.

### DETAILED DESCRIPTION

Hereinafter, embodiments of the present disclosure will be described in detail with reference to the accompanying drawings.

The embodiments of the present disclosure are provided to more fully explain the present disclosure to those skilled in the art. The embodiments described below may be modified in various forms, and the scope of the present disclosure is not limited thereto. These embodiments are provided to make the present disclosure more complete and to fully convey the spirit of the invention to those skilled in the art.

The terminology used herein is for the purpose of describing particular embodiments and is not intended to limit the invention.

As used herein, the singular form may include the plural form unless the context clearly indicates otherwise. In addition, as used herein, the terms "comprise" and/or "comprising" specify the presence of stated features, numbers, steps, operations, elements, and/or groups thereof, but do not preclude the presence or addition of one or more other features, numbers, steps, operations, elements, and/or groups thereof. As used herein, the term "and/or" includes any and all combinations of one or more of the listed items.

Although the terms first, second, etc. are used in this specification to describe various elements, regions, and/or portions, it is to be understood that these elements, components, regions, layers, and/or portions are not limited by these terms. These terms do not imply any particular order, hierarchy, or priority, and are used only to distinguish one member, area, or section from another. Accordingly, the first element, region, or portion described below may refer to a second element, region, or portion without departing from the teachings of the present disclosure.

Hereinafter, embodiments of the present disclosure will be described with reference to drawings schematically illustrating the same. In the drawings, variations in the shapes depicted may be expected, for example, depending on manufacturing techniques and/or tolerances. Accordingly, embodiments of the present disclosure should not be construed as limited to the specific shapes of the regions illustrated herein, but should include, for example, changes in shape resulting from manufacturing.

A press device for a secondary battery according to the present disclosure is a device configured for automatic and continuous production of electrodes used in secondary batteries. The secondary batteries refer to batteries that are capable of repeated charging and discharging, and include, for example, a lithium-ion battery and a solid-state battery.

Hereinafter, based on the X-axis direction of the drawing, a direction from right to left represents a transport direction of a unit material and corresponds to a width direction of the unit material, and the y-axis direction of the drawing represents a length direction of a unit material and an axial direction of a press part of the press device for the secondary battery. The z-axis direction of the drawing represents an up-down direction of the press device for the secondary battery.

Hereinafter, a unit material refers to a material forming a secondary battery and is formed by stacking positive electrode materials and negative electrode materials notched to a predetermined size. That is, the unit material refers to electrodes cut into sheet units and stacked in a predetermined number. After the unit materials are pressed by the press device, the unit materials may be stacked in multiple layers and used in other processes.

In addition, the unit material is not limited to electrodes for secondary batteries, and may be applied to other types of battery using positive and negative electrode materials, or to structure formed by stacking a predetermined number of very thin metal plates.

The press device for the secondary battery according to an embodiment sequentially presses a plurality of unit materials supplied in sheet units in a transport direction of the unit materials. To enable unit materials continuously supplied in sheet units to be pressed while moving without stopping and to reduce a size of the press device, the press device includes, instead of a conventional cylindrical roll part 1650 shown in FIG. 12, a press part having an arc-shaped contact surface with the unit material and an overall fan shape. Hereinafter, this will be described in detail.

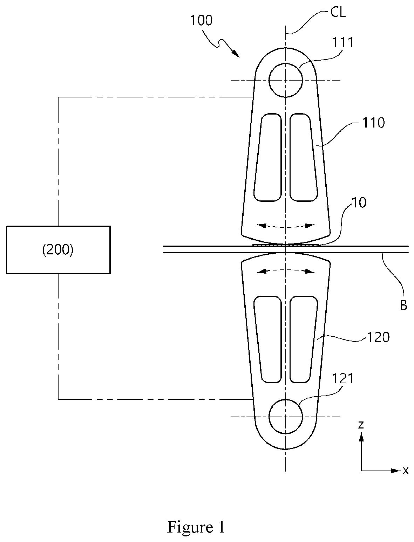

FIG. 1 is a diagram illustrating a press device for a secondary battery according to an embodiment.

Referring to FIG. 1, a press device for a secondary battery according to an embodiment of the present disclosure may include a press part 100 and a controller 200.

The press part 100 may include an upper press 110 and a lower press 120. The upper press 110 and the lower press 120 are arranged in the up-down direction with a unit material 10 interposed therebetween.

The upper press 110 may pivot about a shaft 111. The shaft 111 of the upper press 110 is disposed along a longitudinal direction of the unit material 10. The upper press 110 performs an oscillating motion within a predetermined angular range about the shaft 111 in forward and reverse directions. Specifically, the upper press 110 may perform an oscillating motion about the shaft 111 in a left-right direction in the drawing.

The forward direction corresponds to a transport direction of the unit material, and the reverse direction corresponds to a direction opposite to the transport direction of the unit material.

The upper press 110 may have the shaft 111 disposed at an upper end thereof. A lower end of the upper press 110 may come into contact with the unit material 10. A contact surface at the lower end of the upper press 110 that comes into contact with the unit material 10 may be a curved surface. The upper press 110 may be formed such that a width thereof increases toward the lower end.

The lower press 120 may pivot about a shaft 121. The shaft 121 of the lower press 120 is disposed along the longitudinal direction of the unit material 10. The lower press 120 also performs an oscillating motion within a predetermined angular range in forward and reverse directions about the shaft 121. Specifically, the lower press 120 may perform an oscillating motion in a left-right direction in the drawing about the shaft 121.

The lower press 120 may have a shaft 121 disposed at a lower end thereof. An upper end of the lower press 120 may come into contact with a conveyor belt B that transports the unit material 10. A contact surface at the upper end of the lower press 120 that comes into contact with the conveyor belt B may be a curved surface. The lower press 120 may be formed such that a width thereof increases toward an upper end.

A center of the shaft 111 of the upper press 110 and a center of the shaft 121 of the lower press 120 may be aligned. For example, the center of the shaft 111 of the upper press 110 and the center of the shaft 121 of the lower press 120 may be disposed on a virtual vertical reference line CL.

The controller 200 is connected to the upper press 110 and the lower press 120, respectively, and controls the oscillating motion of the upper press 110 and the lower press 120. Specifically, the controller 200 controls speeds and ranges of oscillating motions of the upper press 110 and the lower press 120.

When the upper press 110 rotates counterclockwise as viewed in the drawing, the lower press 120 may rotate clockwise. As the upper press 110 and the lower press 120 rotate in this manner, the unit material 10 may be pressed and transported in the transport direction of the unit material 10.

Since the press part 100 has a substantially fan shape when viewed in the axial direction, a size of the press part 100 may be significantly reduced compared to a conventional cylindrical roll unit. As described above, by reducing the size of the press part 100, movement control and maintenance of the press part 100 may become easier, and unit materials 10 continuously supplied in sheet units may be pressed without stopping transport of the unit materials 10.

In addition, the press part 100 may have a semicircular shape, and in this case as well, a size of the press part 100 may be reduced compared to a cylindrical roll unit.

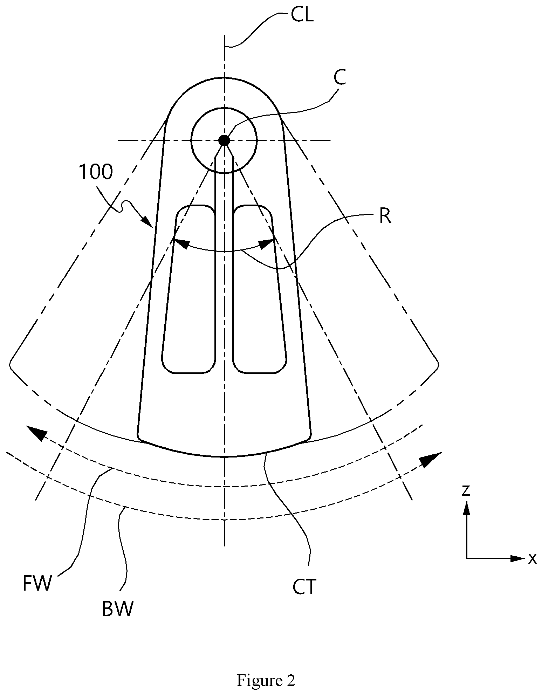

FIG. 2 is a diagram illustrating an oscillating motion of the press part 100.

Referring to FIGS.1 and 2, the press part 100 may perform an oscillating motion within a predetermined angular range about an axis center C. An oscillating motion means that the press part 100 rotates leftward and rightward about the axis center C as shown in the drawing. In this context, rotation in clockwise and counterclockwise directions is included in the oscillation.

The press part 100 may perform an oscillating motion at a predetermined cycle in a left-right direction, as shown in the drawing. Specifically, as indicated by FW in FIG. 2, the press part 100 rotates leftward (clockwise) in the drawing, and thereafter, as indicated by BW in FIG. 2, the press part 100 rotates rightward (counterclockwise) in the drawing. A speed of the oscillating motion of the press part 100 may be set so as to correspond to a transport speed of the unit material 10.

In addition, the press part 100 includes a contact surface CT that contacts the unit material 10. The contact surface CT may have an arc shape when viewed from the shaft 111 of the press part 100.

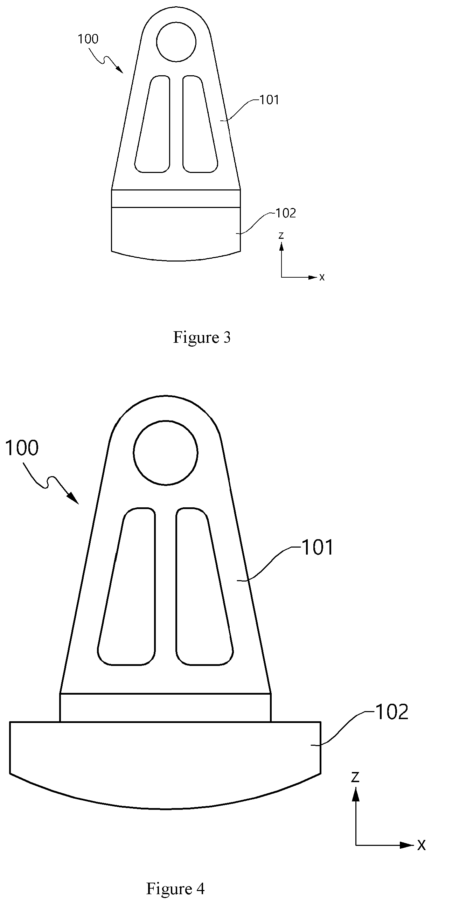

FIG. 3 is a diagram illustrating an example of the press part 100.

Referring to FIG. 3, the press part 100 may include a body 101 in which an axis part 111 is formed, and a contact portion 102 detachably coupled to the body 101. The contact portion 102 includes a contact surface CT configured to contact a unit material 10. The contact portion 102 may be configured in various sizes. The contact portion 102 corresponding to a size of the unit material 10 may be selected and coupled to the body 101.

The contact portion 102 of the press part 100 illustrated in FIG. 3 may have a width similar to a width of the body 101 to correspond to a unit material 10 having a relatively small size, as compared with the press part 100 of FIG. 4 described later. An arch length of the contact surface CT of the contact portion 102 may be variably designed depending on a width of the unit material 10, and therefore, there is an advantage in that only a size of the contact part 102 may be changed to correspond to the unit material 10 without increasing an overall size of the press part 100.

Each of the upper press 110 and the lower press 120 of the press part 100 have an overall fan shape. Each of the upper press 110 and the lower press 120 may be divided into the body 101 and the contact portion 102 as described above or may be formed integrally. Since each of the upper press 110 and the lower press 120 have an overall fan shape, a size and weight thereof may be significantly reduced as compared with a cylindrical press part having an identical diameter, even when a length of the contact surface CT of the contact portion is the same.

FIG. 4 is a diagram illustrating another example of the press part 100.

Referring to FIG. 4, a contact portion 102 of a press part 100 according to another example of the present disclosure may correspond to a unit material 10 having a relatively larger size as compared with the contact part 102 of the press part 100 of FIG. 3.

An arc length of the contact portion 102 may be increased to correspond to a width of the unit material 10 and may be fastened to the body 101. As such, since only the contact portion 102 that contacts the unit material 10 is replaceable, a pressing operation may be carried out to correspond to unit materials 10 having various sizes without replacing the entire press part 100.

However, the press part 100 of FIG. 4 may also be formed such that the body 101 and the contact part 102 are integrally formed.

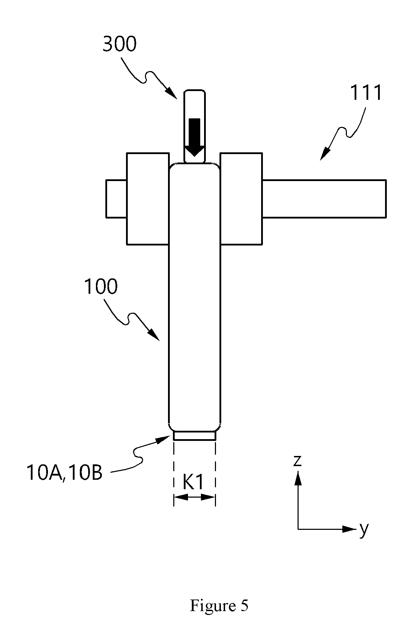

FIG. 5 is a diagram illustrating the pressing member 300 that presses the press part 100.

Referring to FIG. 5, the press device for the secondary battery according to an embodiment of the present disclosure may further include the pressing member 300. The pressing member 300 may press one end of the press part 100 in a vertical direction. When a force by which the press part 100 presses the unit material 10 is insufficient or an additional force is required, the pressing member 300 presses the press part 100 to transmit a force that enables the press part 100 to press the unit material 10.

Since the press part 100 has an overall fan shape, a space is formed in which the pressing member 300 may directly press vertically one end of the press part 100 where the shaft 111 is positioned. Through the pressing member 300 disposed in this space, a pressing force may be stably transmitted to the press part 100.

In an existing cylindrical press part 1650 of FIG. 13, since the press part 1650 itself rotates about a central axis 1670, it is not possible to press the press part 1650 itself, but only a shaft SFT installed on the central axis 1670 may be pressed. However, since the press part 100 of the present disclosure performs only an oscillating motion, there is an advantage in that the pressing member 300 can press the press part 100 itself without difficulty. Since the press part 100 is able to be directly pressed, problems occurring in FIG. 13 according to the description of the conventional technology may be resolved. In the case of a unit material 10 having a relatively small length K1, it is possible to press the press part 100 by using one pressing member 300.

As described with reference to FIGS. 3 and 4, an arc length of the contact surface CT of the contact portion 102 may be varied depending on a width of the unit material 10, so that a size of the press part 100 may be maintained constant even when the width of the unit material 10 increases. Accordingly, a length of the press part 100 may also be varied in a longitudinal direction of the shaft depending on a length of the unit material 10 (which is a direction perpendicular to a transport direction of the unit material and corresponds to the y direction in the drawing).

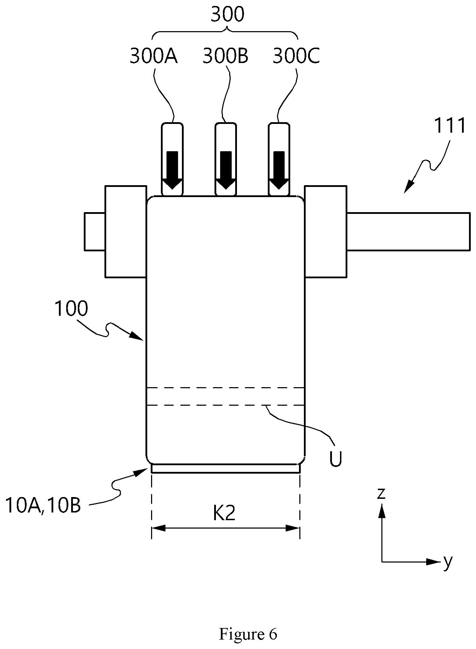

In FIGS. 5 and 6, when lengths of the unit materials 10A and 10B are K1 and K2, respectively, a length of the press part 100 may also be varied depending on K1 and K2.

In addition, a number of pressing members 300 may be variable depending on a length of the unit material 10, and a plurality of pressing members 300 are arranged along the longitudinal direction of the shaft of the press part 100.

That is, since the length of the press part 100 of FIG. 6 is greater than the length of the press part 100 of FIG. 5 in the y-axis direction, a number of pressing members 300 pressing an upper end of the press part 100 may also increase.

FIG. 6 is a diagram illustrating a modified example of the pressing member 300 that presses a press part 100.

Referring to FIG. 6, according to the modified example of the pressing member 300, in the case of a unit material 10 having a relatively large length K2, a plurality of pressing members 300A, 300B, and 300C may be arranged. The plurality of pressing members 300A, 300B, and 300C are arranged at regular intervals along the axial direction to evenly press the press part 100. Since the plurality of pressing members 300 press the press part 100 along the axial direction of the press part 100, even the unit material 10 having the large length K2 may be uniformly pressed, thereby resolving the problem that a conventional press part described in FIG. 13 is not able to uniformly apply pressure to the unit material 10.

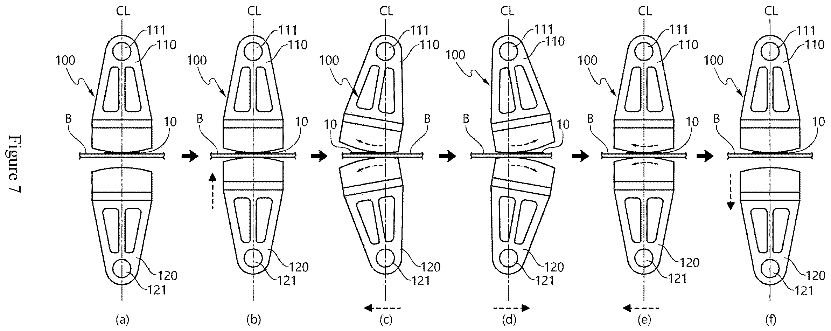

FIG. 7 is a diagram illustrating a process of pressing a unit material using a press device for a secondary battery according to an embodiment of the present disclosure.

The press device used in the pressing process according to an embodiment of the present disclosure has the same structure as the press device of the embodiment described above. That is, the press device includes a press part 100 configured to contact the unit material 10 in the up-down direction, and a controller 200 configured to control rotation of the press part 100.

The control part 200 controls the press part 100 to perform an oscillating motion in forward and reverse directions within a predetermined angular range about shafts 111 and 121 of the press part 100.

When a center of the unit material 10 is aligned with a center of the press part 100, the unit material 10 moves forward by a predetermined distance and backward by the predetermined distance in a transport direction of the unit material 10, and then moves forward again to be aligned again with the center of the press part 100. At this point, the press part 100 presses the unit material 10 while rotating in a direction corresponding to the movement direction of the unit material 10.

More specifically, when the center of the unit material 10 is aligned with the center of the press part 100, the press part 100 moves vertically toward the unit material 10 to press the unit material 10 while rotating in a direction corresponding to the movement direction of the unit material 10. When the center of the unit material 10 is again aligned with the center of the press part 100, the press part 100 moves vertically away from the unit material 10 to release pressure applied to the unit material 10.

When the pressure applied by the press part 100 is released, the pressed unit material 10 moves in the transport direction of the unit material 10. Thereafter, after a center of a subsequent unit material is aligned with the center of the press part 100, the unit material performs operations of moving forward, backward, and then forward again in the same manner as described above, while pressing by the press part 100 is simultaneously performed.

The operations will be described in more detail with reference to FIG. 7.

As shown in FIG. 7, the press part 100 includes an upper press 110 and a lower press 120 arranged in the up-down direction with a unit material 10 interposed therebetween. A conveyor belt B for transporting the unit material 10 is positioned below the unit material 10. The unit material 10 is moved in a transport direction by the conveyor belt B to move forward in the transport direction of the unit material 10 and backward in a direction opposite to the transport direction.

In the press device illustrated in FIG. 7, the upper press 110 performs only an oscillating motion in forward and reverse directions at a position close to the unit material 10. The close position refers to a position at which the upper press 110 is closest to the unit material 10 while the unit material 10 is transported on the conveyor belt B, without the lowest point of the upper press 110 contacting a surface of the unit material 10. The lower press 120 moves vertically in the up-down direction below the conveyor belt B to press the unit material 10 or to release pressure applied to the unit material 10.

The upper press 110 is positioned above and close to the unit material 10, does not move in the up-down direction, and rotates in forward and reverse directions. The lower press 120 moves vertically upward from below the unit material 10 to press the unit material 10, and after the pressing operation is completed, only the lower press 120 moves downward to a position below the unit material 10.

Specifically, the unit material 10 is aligned with a center of the lower press 120, as shown in FIG. 7(a) . It is assumed that the unit material 10 is transferred from the right to the left in FIG. 7. Then, the lower press 120 ascends vertically to press the unit material 10 while pressing the conveyor belt B, as shown in FIG. 7(b). At this point, the upper press 110 also presses the unit material 10 by a force applied by the lower press 120. The unit material 10 aligned at the center of the lower press 120 moves forward in the transport direction, which is a forward direction from right to left in FIG. 7. At this point, the upper press 110 and the lower press 120 rotate together in a direction corresponding to the movement direction of the unit material 10 to press the unit material 10, as shown in FIG. 7(c). Referring to FIG. 7, the upper press 110 rotates clockwise about a rotation axis, and the lower press 120 rotates counterclockwise about a rotation axis. An end of the unit material 10 moves forward to a position CL corresponding to a state where the center of the unit material 10 is aligned with the center of the lower press. Then, a right half of the unit material 10 is pressed.

After forward movement of the unit material 10 is completed, the unit material 10 moves backward in an opposite direction of the transport direction of the unit material 10. A front end of the unit material 10 moves backward to the position CL corresponding to a state in which the center of the unit material 10 is aligned with the center of the lower press 120. At this point, the upper press 110 and the lower press 120 rotate together while pressing the unit material 10 in a direction (i.e., backward direction) corresponding to the movement direction of the unit material 10, as shown in FIG. 7(d). The upper press 110 rotates counterclockwise about the shaft 111, and the lower press 120 rotates clockwise the shaft112. Then, the entire unit material 10 is pressed.

After the backward movement of the unit material 10 is completed, the unit material 10 moves forward again to the position CL corresponding to a state in which the unit material 10 is aligned with the center of the lower press 120, as shown in FIG. 7(e). The upper press 110 and the lower press 120 also rotate together while pressing the unit material 10 in a direction (i.e., forward direction) corresponding to a movement direction of the unit material 10, as shown in FIG. 7(e). Then, a left half of the unit material 10 is pressed.

When the center of the unit material 10 is aligned with the center of the lower press 120, the lower press 120 descends vertically, as shown in FIG. 7(f). Then, the pressed unit material 10 moves in the transport direction of the unit material 10, and the center of a subsequent unit material is aligned with the center of the lower press 120. The movement of the unit materials is performed by a conveyor belt B.

Through the process disclosed in FIG. 7, after the center of the unit material 10 is aligned with the center of the lower press 120, the unit material 10 undergoes a sequence of forward, backward, and forward movements to be realigned at the center, and is then transported in the transport direction. Thereafter, a subsequent unit material repeats the same sequence of operations.

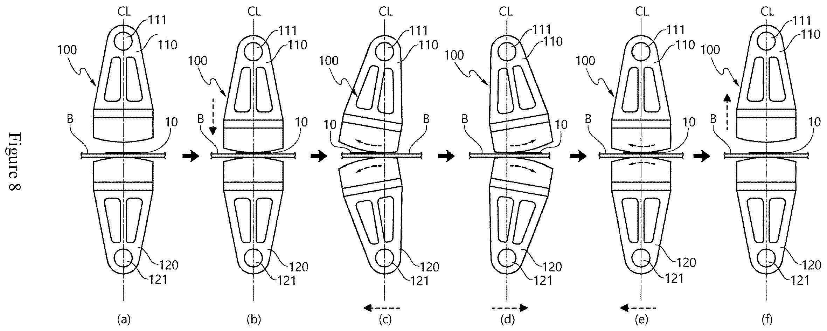

FIG. 8 is a diagram illustrating a process of pressing a unit material using a press device for a secondary battery according to another embodiment of the present disclosure.

In the embodiment of FIG. 8, unlike the embodiment of FIG. 7, the lower press 120 only performs an oscillating motion in the forward and reverse directions at a position close to the conveyor belt B, while the upper press 110 moves vertically in the up-down direction above the conveyor belt B to press or release pressure applied to the unit material 10.

That is, when the unit material 10 is aligned with the center of the upper press 110, as shown in FIG. 8(a), the upper press 110 descends vertically to press the unit material 10, as shown in FIG. 8(b). Thereafter, the upper press 110 and the lower press 120 rotate in a direction corresponding to a movement direction of the unit material 10 to press the unit material 10. When the unit material 10 is again aligned with the center of the upper press 110, as shown in FIG. 8(c), FIG. 8(d), and FIG. 8(e), the upper press 110 ascends vertically, as shown in FIG. 8(f). Then, the pressed unit material 10 moves in the transport direction, and the center of a subsequent unit material is aligned with the center of the upper press 110.

That is, the embodiment of FIG. 8 differs from the embodiment of FIG. 7 only in that the upper press 110 vertically ascends and descends, whereas the lower press 120 vertically ascends and descends in the embodiment of FIG. 7. The processes in which the upper press 110 and the lower press 120 press and rotate the unit material 10 and the unit material 10 is transported are otherwise identical in the embodiments of FIGS. 7 and 8. Therefore, a detailed description of the embodiment of FIG. 8 is omitted.

As yet another embodiment, a process is also possible in which the upper press 110 and the lower press 120 simultaneously move vertically in the up-down direction from above and below the unit material 10 and the conveyor belt B to press or release pressure applied to the unit material 10.

That is, the lower press 120 and the upper press 110 simultaneously move vertically to press the unit material 10 at a center thereof. Thereafter, the unit material 10 then moves in the same manner as in the operations of FIGS. 7 and 8.

In the embodiments of FIGS. 7 and 8, after the center of the unit material 10 is aligned with the center of the upper press 110 or the lower press 120, a distance by which the unit material 10 moves backward is greater than a distance by which the unit material 10 moves forward. That is, during forward movement, the unit material 10 moves by only half of a width of the unit material 10, whereas during backward movement, the unit material 10 moves by the width of the unit material 10.

Through the oscillating motion of the press part 100, the press device according to the embodiment of the present disclosure may perform pressing without stopping unit materials 10 that are transported individually in sheet units.

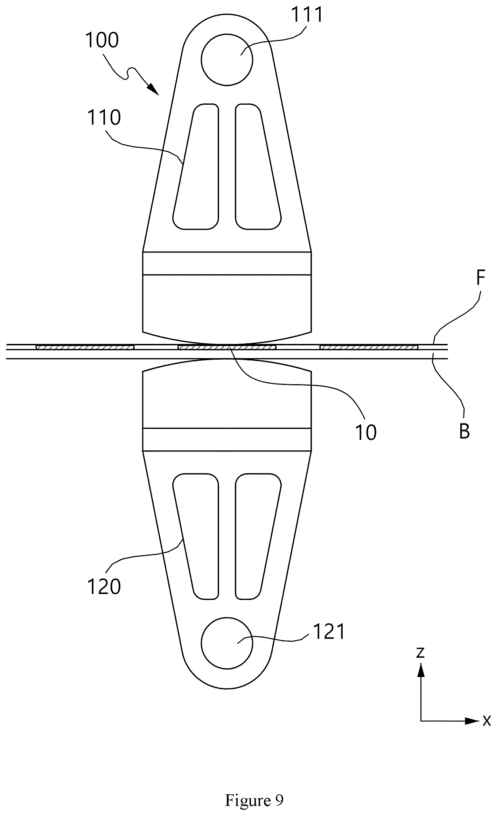

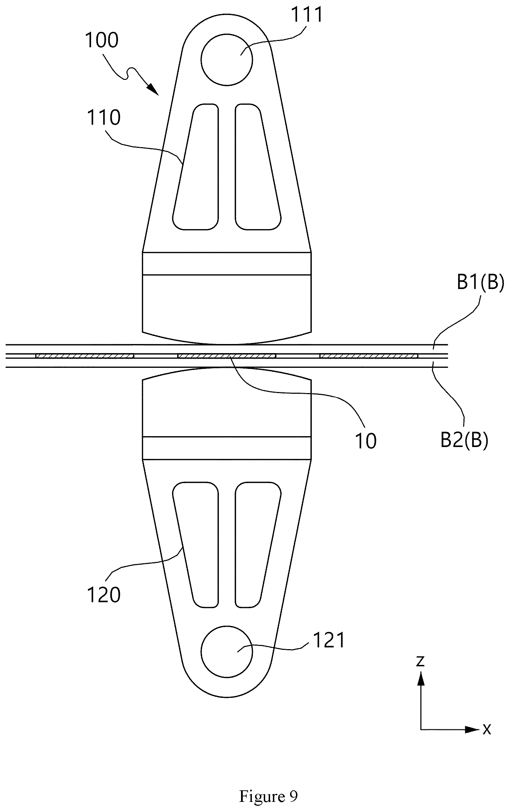

FIG. 9 is a diagram illustrating a press device for a secondary battery according to another embodiment.

Referring to FIG. 9, a press device for a secondary battery according to another embodiment may further include a film F. The film F may be interposed between the upper press 110 and the unit material 10. The film F is disposed along the conveyor belt B. One side of the film F may come into contact with the upper press 110. The other side of the film F may come into contact with the unit material 10. The film F may protect a surface of a unit material 10 when the unit material 10 is pressed by the upper press 110.

Meanwhile, in the present disclosure, the conveyor belt B may be formed of steel. The conveyor belt B formed of steel may withstand a pressing force applied by the press part 100 well. Of course, the conveyor belt B may be formed of rubber, just like a general conveyor belt.

FIG. 10 is a diagram illustrating a press device for a secondary battery according to yet another embodiment.

Referring to FIG. 10, in the press device for the secondary battery according to yet another embodiment, the conveyor belt B may include an upper conveyor belt B1 and a lower conveyor belt B2. The upper conveyor belt B1 may be positioned above the unit material 10. The lower conveyor belt B2 may be positioned below the unit material 10. That is, the unit material 10 may be interposed between the upper conveyor belt B1 and the lower conveyor belt B2 in an up-down direction.

These upper conveyor belt B1 and lower conveyor belt B2 may be formed of rubber or steel (i.e., metal). When formed of steel, the upper conveyor belt B1 and the lower conveyor belt B2 may withstand a pressing force applied by the press part 100 better than a rubber conveyor belt. As the upper press 110 is positioned above the upper conveyor belt B1 and the lower press 120 is positioned below the lower conveyor belt B2, the unit material 10 may be pressed by the pressing process illustrated in FIGS. 7 and 8.

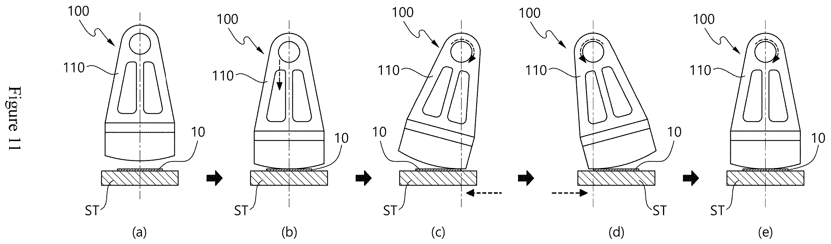

FIG. 11 is a diagram illustrating a process of pressing a unit material using a press device for a secondary battery according to yet another embodiment of the present disclosure.

The press part 100 may further include a transport plate ST in place of the lower press 120, and the transport plate ST is configured to transfer the unit material 10. A conveyor belt B for transporting the unit material 10 is not provided.

When the upper press 110 moves downward and comes into contact with the unit material 10 at a center thereof, the upper press 110 and the transport plate ST rotate and move in a direction corresponding to a transport direction of the unit material 10 and then in a reverse direction opposite to the transport direction to press the unit material 10, and sequentially rotate and move so that the upper press 110 is repositioned at the center of the unit material 10.

That is, in the pressing operation of FIG. 8, the transport plate ST is provided instead of the lower press 120 and the conveyor belt B, and the upper press 110 performs the same pressing operation as described with reference to FIG. 8. That is, in the pressurizing process of FIG. 8, a transport plate ST exists instead of the lower press 120 and the conveyor belt B, and the upper press 110 performs the same operation as the pressurizing process of FIG. 8.

Referring to FIG. 11, the press device for the secondary battery according to yet another embodiment may perform a pressing operation only using the upper press 110 without the lower press. At this point, the transport plate ST may be provided, instead of the lower press and the conveyor belt. The transport plate ST is configured to transfer a unit material 10 in a left-right direction in the drawing.

For example, as shown in FIG. 11(a), the transport plate ST may transport the unit material 10 so that the unit material 10 is aligned to the center of the upper press 110. Thereafter, as shown in FIG. 11(b), the upper press 110 descends to come into contact with the center of the unit material 10.

Next, as shown in FIG. 11(c), the transport plate ST and the upper press 110 may move together to press the unit material 10. For example, the upper press 110 may rotate clockwise and the transport plate ST may move to the left in the drawing to press the unit material 10.

Next, as shown in FIG. 11(d), the upper press 110 rotates counterclockwise, and the transport plate ST moves to the right in the drawing to press the unit material 10.

Next, as shown in FIG. 11(e), the upper press 110 rotates clockwise again, so that the center of the upper press 110 and the unit material 10 may be aligned with each other and then the pressing of the unit material 10 may be stopped. Next, the upper press 110 may move upward and remain on standby to press a subsequent unit material 10. Thereafter, the subsequent unit material is transferred to a position below the upper press 110, and the same process is repeated.

As described above, embodiments of a press device for a secondary battery of the present disclosure have been described. However, various modifications may be made without departing from the scope of the present disclosure.

According to an embodiment, since a press part having an arc-shaped contact surface presses an electrode by an oscillating motion, electrodes supplied individually may be continuously pressed without interruption.

According to an embodiment, since the press part has a fan shape when viewed in the axial direction, precision control may be achieved while the size and weight of the press part is significantly reduced compared to a cylindrical press having the same diameter.

According to an embodiment, even when a length of the press part increases in response to a size of an electrode, a plurality of pressing members are arranged along a longitudinal direction of the press part, thereby minimizing variations in a pressing force applied to the electrode in response to minute changes in a shaft of the press part.

According to an embodiment, a protective film may be disposed between an electrode and the press part to prevent displacement of the electrode.

Therefore, the scope of the present disclosure is not limited to the described embodiments, but is defined not only by the claims set forth below but also by equivalents thereof.

That is, the above-described embodiments are to be understood as exemplary in all respects and not restrictive. The scope of the present disclosure is defined by the claims set forth below rather than by the foregoing detailed description, and all changes or modifications that fall within the meaning and scope of the claims and their equivalents are to be interpreted as being included in the scope of the present disclosure.

## Claims

1. A press device for a secondary battery, the device configured to sequentially press a plurality of unit materials supplied continuously and comprising:
a press part configured to contact the unit material in an up-down direction; and
a controller configured to control rotation of the press part,
wherein:
the controller controls the press part to perform an oscillating motion in forward and reverse directions within a predetermined angle range about a shaft of the press part,
when a center of the unit material is aligned with a center of the press part, the unit material moves forward by a predetermined distance and backward by the predetermined distance in a transport direction of the unit material, and then moves forward again to be aligned again with the center of the press part, and
the press part presses the unit material while rotating in a direction corresponding to a movement direction of the unit material.

2. The press device of claim 1, wherein:
the press part comprises a curved contact surface that contacts the unit material, and
the contact surface has an arc shape when viewed from the shaft of the press part.

3. The press device of claim 2, wherein:
a width of the unit material is less than an arc length of the contact surface, and
a length of the press part is variable in a longitudinal direction of the shaft in response to a length of the unit material.

4. The press device of claim 1, further comprising a pressing member configured to press the press part vertically.

5. The press device of claim 4, wherein:
the pressing members are provided in a number that is variable in response to a length of the unit material, and
a plurality of pressing members are arranged along a longitudinal direction of the shaft of the press part.

6. The press device of claim 2, wherein:
the press part comprises an upper press and a lower press arranged in the up-down direction with the unit material interposed therebetween,
each of the upper press and the lower press comprises a body in which the shaft is formed, and a contact portion connected to the body and comprising the contact surface,
each of the upper press and the lower press has an overall fan shape, and
the contact portion is detachably coupled to the body, and an arc length of the contact surface of the contact portion is also variable in response to a width of the unit material.

7. The press device of claim 1, wherein when the center of the unit material is aligned with the center of the press part, the press part moves vertically toward the unit material to press the unit material while rotating in a direction corresponding to a movement direction of the unit material, and when the center of the unit material is aligned with the center of the press part again, the press part moves vertically away from the unit material to release pressure applied to the unit material.

8. The press device of claim 7, wherein when the pressure applied by the press part is released, the unit material moves in the transport direction of the unit material, and a center of a subsequent unit material is aligned with the center of the press part.

9. The press device of claim 7, wherein:
the press part comprises an upper press and a lower press arranged in the up-down direction with the unit material interposed therebetween, and
the press part further comprises a conveyor belt positioned below the unit material and configured to transport the unit material.

10. The press device of claim 9, wherein the upper press only performs an oscillating motion in forward and reverse directions at a position close to the unit material, and the lower press moves vertically in the up-down direction below the conveyor belt to press the unit material or release pressure applied to the unit material.

11. The press device of claim 10, wherein, when the unit material is aligned at a center of the lower press, the lower press ascends vertically to press the conveyor belt and thereby press the unit material, and the upper press and the lower press rotate in a direction corresponding to a movement direction of the unit material to press the unit material, and when the unit material is aligned with the center of the lower press again, the lower press descends vertically, the pressed unit material moves in the transport direction of the unit material, and a center of a subsequent unit material is then aligned with the center of the lower press.

12. The press device of claim 9, wherein the lower press only performs an oscillating motion in the forward and reverse directions at a position close to the conveyor belt, and the upper press moves vertically in the up-down direction above the conveyor belt to press the unit material or release pressure applied to the unit material.

13. The press device of claim 12, wherein, when the unit material is aligned with a center of the upper press, the upper press descends vertically to press the unit material, and the upper press and the lower press rotate in a direction corresponding to a movement direction of the unit material to press the unit material, and when the unit material is aligned with the center of the upper press again, the upper press ascends vertically, the pressed unit material moves in a transport direction of the unit material, and a center of a subsequent unit material is then aligned with the center of the upper press.

14. The press device of claim 9, wherein the upper press and the lower press simultaneously move vertically in the up-down direction above and below the unit material and the conveyor belt to press the unit material or release pressure applied to the unit material.

15. The press device of claim 1, wherein a distance by which the unit material moves backward is greater than a distance by which the unit material moves forward.

16. The press device of claim 9, further comprising a film interposed between the upper press and the unit material, wherein the film comes into contact with the upper press and the unit material to protect a surface of the unit material when the upper press presses the unit material.

17. The press device of claim 9, wherein the conveyor belt comprises an upper conveyor belt positioned above the unit material and a lower conveyor belt positioned below the unit material, with the unit material interposed therebetween, and the conveyor belt is formed of rubber or steel.

18. The press device of claim 9, wherein:
the press part further comprises a transport plate in place of the lower press, the transport plate being configured to transport the unit material, and
when the upper press moves downward and comes into contact with the unit material at the center of the unit material, the upper press and the transport plate rotate and move together in a forward direction corresponding to a transport direction of the unit material and then in a reverse direction opposite to the transport direction to press the unit material, and subsequently rotate and move so that the upper press is repositioned at the center of the unit material.
